# EUROPEAN PATENT APPLICATION

(11) **EP 4 843 772 A1**
(43) Date of publication of application: **25.11.2026**
(21) Application number: 26178706.3
(22) Date of filing: 13.05.2026
(51) Int. Cl.: B32B 7/12

(54) **NON-ALUMINIUM FOIL LAMINATED PACKAGING MATERIAL, PACKAGING CONTAINER, AND METHODS OF MANUFACTURE THEREOF**

(30) Priority: 19.05.2025 IT 202500011161
(71) Applicant: Tetra Laval Holdings & Finance S.A., 1009 Pully (CH)
(72) Inventor: GUIDETTI, Gloria, 41123 Modena (IT); WAHLBERG, Jan, 221 86 Lund (SE)
(74) Representative: Tetra Pak Patent Attorneys

(57) **Abstract**

The present invention relates to a non-aluminium foil laminated packaging material (20a, 20b) for packaging of liquid or semi-liquid food products, the laminated packaging material (20a, 20b) comprising:
- a barrier layer (10a, 10b, 10c, 10d, 25a, 25b) comprising a vapour-deposited metal and/or metalloid layer (13a, 13b, 13c, 13d) and at least one graphene-containing layer or portion (12a, 12b, 12c, 12d) being in proximity of the vapour-deposited metal and/or metalloid layer (13a, 13b, 13c, 13d); and
- an inner liquid-tight, heat-sealable polymer layer (23), intended for product contact; wherein said at least one graphene-containing layer or portion (12a, 12b, 12c, 12d) comprises a graphene-based material, and a polymer base, and
wherein the polymer base is selected from the group consisting of polyolefins, polyamides, polyesters, epoxide resins, polyurethanes, polystyrene, polycarbonate, acrylics, acrylates, or any combination thereof. The present invention further relates to a packaging container, and methods of manufacture of said material and container.

## Description

### Technical field

The present invention relates to a laminated packaging material, in particular intended for liquid carton food packaging, and to a method of manufacturing thereof. The invention further relates to liquid carton packaging containers comprising the laminated packaging material, and to methods of forming such containers.

### Background

Packaging containers of the single-use disposable type for liquid foods are often produced from a packaging laminate based on paperboard or carton. One such commonly occurring packaging container is marketed under the trademark Tetra Brik^{®} Aseptic and is principally employed for aseptic packaging of liquid foods such as milk, fruit juices etc, sold for long-term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat-sealable thermoplastic polymers, such as adhesive polymers and/or polyolefins. Also on the outside of the bulk layer, there is an outermost heat-sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both longitudinal edges of the web being united to each other in an overlap joint by welding together the inner- and outermost heat-sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally cuboid shape, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®}-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

In recent years, the majority of the producers of food packaging containers are focusing to reach recyclability and sustainability standards promoted by various governments and other institutions, such as the European Union. The objective of these efforts is to deliver a future carton-based packaging container, made to a larger extent of renewable packaging materials, being to a higher degree recyclable, in order to reduce waste and pollution.

However, most producers of the packaging material for forming the packaging containers still integrate a thin foil of aluminium in the packaging material for food protection. A layer of an aluminium foil in the packaging laminate provides gas barrier properties quite superior to most other gas barrier materials. The conventional aluminium-foil-based packaging laminate for liquid food aseptic packaging is still the most cost-efficient packaging material, at its level of performance, available on the market today.

As well as the barrier properties of the aluminium, the metal foil is also used as a workpiece to provide various heat seals of the packaging material in order to form closed and sealed packaging containers. The heat seals may be longitudinal or transversal in relation to the package dimensions, depending on the desired shape and appearance of the final packaging container.

The aluminium foil renders the packaging material thermosealable by inductive thermosealing (also referred to as "induction heat sealing") which is a rapid and efficient sealing technique for obtaining mechanically strong, liquid- and gas-tight sealing joints or seams during the production of the containers. The technique of induction welding is based on Faraday's law, by which an alternating magnetic field generated around a conductor is capable of inducing an electrical current in another conductor placed in close proximity (workpiece). Heat is then generated in the workpiece due to Joule effect. Thus, a magnetic field is used to induce eddy currents in the metal of the aluminium foil. As the foil is heated, thermal energy is transferred by conduction to the plastic laminate layers of the packaging material which then melt and bond to each other. Upon deactivation of the induction heating, the plastic layers re-solidify to provide a correct and durable sealing. Induction heating may be used to provide longitudinal sealing as well as transverse sealing. A good sealing of the package containers ensures a sterile content for the entire lifetime of the product. For packaging materials currently on the market the workpiece is an aluminium foil having a thickness of about 6 microns. In order to provide efficient and robust seals, the inductor is powered by an AC power source generating a variable-voltage/current having a frequency of around 535 kHz.

However, aluminium is not a renewable source, hence the extensive use is in conflict with the previously mentioned goal of renewable and recyclable packages. For this reason, developing a packaging material without aluminium is of ever-growing importance. On the other hand, potential issues may arise in performing efficient sealing of a packaging material that does not include an aluminium foil.

Any other material to compete with the foil-based materials must be cost-efficient regarding raw materials, have comparable food preserving properties and have a comparably low complexity in the converting of materials into a finished packaging laminate.

Among the efforts of developing non-aluminium foil materials for liquid food carton packaging, there is also a general incentive towards developing pre-manufactured films or sheets having high barrier properties, or towards combining several separate barrier materials in a multilayer film or sheet. Such films or sheets would replace the aluminium-foil barrier material in the conventional laminated packaging material and may further be adapted to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problems in an economy based on circulation of materials and renewable (non-fossil) materials, i.e. aqueous dispersion coatings and vapour deposition coatings.

Metallised vapour deposition coating layers (also referred to herein as "vapour-deposited metal layers" and "metallisation"; the terms "vacuum-deposited metal layers" and "vacuum-coated metal layers" may also be used) form a good alternative to aluminium foil as they also allow inductive thermosealing, meaning that the packaging laminate is directly suitable for use in existing filling and packaging machines. This is discussed in WO2011/003565 and WO2022/135837 of the applicant. In order to maintain a relatively high induced power to melt the polymer in the package when the workpiece thickness is reduced, the magnetic field frequency must be increased.

However, as such coatings are very thin, they are relatively sensitive to mechanical stress and damage, in comparison to an aluminium foil, and may not be sufficiently robust for fold-forming and sealing of packaging containers. When a paper barrier or a polymer barrier substrate is used together with vapour-deposited metal layer(s), there is a problem with the large amounts of heat generated in the laminate structure during sealing. High-frequency induction heating (HFIH) and ultrasonic (US) sealing processes may provide problems with the heat generated in the sealing area, as the heat may become too much, and affecting polymer layers and the vapour-deposited metal layer negatively. Overheating can cause polymers to degrade, leading to a loss of mechanical properties, discolouration, and brittleness, and/or result in defects like bubbles, blisters, or rough textures. Excessive heat can also cause the polymer to expand or contract unevenly, leading to warping or other dimensional changes. In addition, the bond between the metallisation layer and the substrate it is applied on, or other layer being in contact therewith, can weaken, causing the metal to peel or flake off. Overheating can also weaken the paper, making it more prone to tearing and breaking.

In addition, a laminate having a polymer barrier substrate cannot be sealed using HFIH as the peak of temperature during the seal will be too high, and result in melting of barrier layers, thereby resulting in the metallisation cracking.

There is thus a need for ways to improve the cooling rate of packaging laminates during sealing.

Carbon-containing materials such as graphene have an advantage that they can be used in induction sealing of packages, as disclosed in WO2021/005120 of the applicant.

### Summary of the invention

In view of the above disadvantages of the prior art, there is a need for a sustainable packaging material, not requiring an aluminium foil, while still allowing for robust sealings. It was found that improved and quick cooling of packaging laminates and their sealing areas was achieved using a graphene layer in the proximity of vapour-deposited metal layers used in the sealing of packages. It was found that the use of the graphene-containing layer provided substantially reduced negative effects during sealing on the polymeric layers, and the metallisation layers, as no damage was visible on the metallisation layers. The higher cooling rate of the seal enables a lowered peak temperature, and a more robust seal.

The present invention relates to a non-aluminium foil laminated packaging material for packaging of liquid or semi-liquid food products, the laminated packaging material comprising:
- a barrier layer comprising a vapour-deposited metal and/or metalloid layer and at least one graphene-containing layer or portion being in proximity of the vapour-deposited metal and/or metalloid layer, and
- an inner liquid-tight, heat-sealable polymer layer, intended for product contact,

wherein said at least one graphene-containing layer or portion comprises a graphene-based material, and a polymer base, and
wherein the polymer base is selected from the group consisting of polyolefins, polyamides, polyesters, epoxide resins, polyurethanes, polystyrene, polycarbonate, acrylics, acrylates, or any combination thereof. The innermost layer of said at least one inner liquid-tight, heat-sealable polymer layer is intended for product contact.

Preferably, the vapour-deposited metal and/or metalloid layer is induction heat susceptible or susceptible to heat generated using ultrasound, and the laminated packaging material is suitable for induction heat sealing, and/or ultrasonic sealing.

The packaging material may further comprise at least one of an outermost liquid-tight polymer layer, and a bulk layer of paper, paperboard, or other cellulose-based material.

Said graphene-based material may be selected from the group predominantly comprising, preferably consisting of, exfoliated flakes of graphene, graphene monolayer material, or multilayer graphene platelets, having up to 20, such as 10 or fewer, stacked monolayer flakes of graphene, or any combination thereof.

Said at least one graphene-containing layer or portion may comprise the graphene-based material in an amount of 10-90 weight-%, such as 25-85 weight-%, 30-80 weight-%, 35-75 weight-%, or 30-70 weight-%, based on dry solids content.

Said polymer base may be selected from the group consisting of polyethylene, polypropylene, nylon, acrylic, styrene acrylic, aliphatic polyurethane, polyurethane-styrene acrylate, or any combination thereof. Preferably the polymer base may be selected from the group consisting of aliphatic polyurethane, polyurethane-styrene acrylate, or any combination thereof.

Said at least one graphene-containing layer or portion may comprise the polymer base in an amount of about 1-90 weight-%, such as 2-80 weight-%, 5-70 weight-%, 10-60 weight-%, or 15-50 weight-%, based on dry solids content.

Said at least one graphene-containing layer or portion may further comprise a dispersant selected from the group consisting of starch, graphene oxide, an alkali metal salt of an acrylic polymer, a carboxylic acid polymer, an alkali metal salt of a carboxylic acid polymer, or any combination thereof. For example, the at least one graphene-containing layer or portion may comprise a sodium salt of an acrylic polymer, a carboxylic acid polymer, an sodium salt of a carboxylic acid polymer, or any combination thereof, preferably the at least one graphene-containing layer or portion may be selected from poly(acrylic acid), poly(acrylic acid) sodium salt, poly(methacrylic acid), poly(methacrylic acid) sodium salt, or any combination thereof.

Said at least one graphene-containing layer or portion may comprise the dispersant in an amount of about 0.3-15 weight-%, such as 0.3-10 weight-%, or 0.3-5 weight-%, based on dry solids content.

Said at least one graphene-containing layer or portion may further comprise a property improving component selected from the group consisting of polyetherimide, polyvinyl alcohol (PVOH), PVOH copolymers, polyethylene, such as low molecular weight PE, or any combination thereof.

Said at least one graphene-containing layer or portion may comprise the property improving component in an amount of about 0.5-15 weight-%, such as 0.5-10 weight-% or 1-5 weight-%, based on dry solids content.

The thickness of said at least one graphene-containing layer or portion may be in the range of 0.001-500 µm, such as 0.01-300 µm, 0.05-100 µm, 0.1-50 µm, 0.5-40 µm, or 1-35 µm. This layer or portion thickness is related to the thickness of the dry material of the layer or portion.

The vapour-deposited metal and/or metalloid layer may comprise a metal and/or metalloid compound selected from aluminium, silicon, or any oxides thereof, or any combination thereof, such as comprising aluminium, aluminium oxide, silicon oxide, or any combination thereof. Preferably the vapour-deposited metal and/or metalloid layer comprises aluminium.

The thickness of the vapour-deposited metal and/or metalloid layer may be in the range of 1-500 nm, such as 10-100 nm, 15-80 nm, such as 20-50 nm.

The barrier layer may further contain a paper barrier material layer, or a polymer barrier material layer.

The outermost liquid-tight polymer layer may comprise or mainly consist of a thermoplastic polymer. By "mainly consist of" means herein that the outermost liquid-tight polymer layer may comprise at least 60 weigth-% of a thermoplastic polymer, preferably at least 70 weigth-%, preferably at least 80 weigth-%, preferably at least 90 weigth-%, preferably at least 95 weigth-% preferably at least 98 weigth-%, based on the total weight of the outermost liquid-tight polymer layer. The outermost liquid-tight polymer layer may consist of a thermoplastic polymer. The thermoplastic polymer may be selected from polyethylene (PE), polypropylene (PP), or any combination or copolymer thereof, such as the thermoplastic polymer may be selected from PP, LDPE, LLDPE, mLLDPE, or any combination or copolymer thereof. Preferably the thermoplastic polymer may be selected from LDPE, LLDPE, mLLDPE, or any combination thereof.

Said at least one inner liquid-tight, heat-sealable polymer layer may mainly consist of thermoplastic polymer. By "mainly consist of" means herein that the inner liquid-tight, heat-sealable polymer polymer layer may comprise at least 60 weigth-% of a thermoplastic polymer, preferably at least 70 weigth-%, preferably at least 80 weigth-%, preferably at least 90 weigth-%, preferably at least 95 weigth-% preferably at least 98 weigth-%, based on the total weight of the inner liquid-tight, heat-sealable polymer layer. Said at least one inner liquid-tight, heat-sealable polymer layer may consist of thermoplastic polymer. The thermoplastic polymer may preferably be selected from polyethylene (PE), polypropylene (PP), or any combination or copolymer thereof, such as the thermoplastic polymer may be selected from PP, LDPE, LLDPE, mLLDPE, or any combination or copolymer thereof. More preferably the thermoplastic polymer may selected from LDPE, LLDPE, mLLDPE, or any combination thereof.

The packaging material may further comprise at least one intermediate polymer layer comprising or mainly consisting of a compound selected from polyolefins and/or modified polyolefins, such as polyethylenes, graft co-polymers of polyethylene or polypropylene with functional group containing carboxylic monomer units, e.g., (meth)acrylic acid monomers or maleic anhydride (MAH) monomers. Preferably said compound is selected from low density polyethylene, ethylene acrylic acid copolymers (EAA), ethylene methacrylic acid copolymer (EMAA)), maleic anhydride grafted (MAH-g) polyethylene, or any combination thereof, and preferably selected from ethylene acrylic acid copolymers (EAA), ethylene methacrylic acid copolymer (EMAA)), maleic anhydride grafted (MAH-g) low density polyethylene, or any combination thereof. By "mainly consisting of" means herein that the at least one intermediate polymer layer may comprise at least 60 weigth-% of a compound selected from polyolefins and/or modified polyolefins, preferably at least 70 weigth-%, preferably at least 80 weigth-%, preferably at least 90 weigth-%, preferably at least 95 weigth-% preferably at least 98 weigth-%, based on the total weight of that the at least one intermediate polymer layer. Said at least one intermediate polymer layer may consist of a compound selected from polyolefins and/or modified polyolefins, according to the above

Said at least one intermediate polymer layer may be provided within the barrier layer, may be provided between the barrier layer and said at least one inner liquid-tight, heat-sealable polymer layer, and/or may be provided between the barrier layer and the bulk layer.

The barrier layer may be positioned in proximity of, such as adjacent, said at least one inner liquid-tight, heat-sealable polymer layer. Preferably said at least one graphene-containing layer or portion may be positioned between said paper barrier material layer or polymer barrier material layer and said at least one inner liquid-tight, heat-sealable polymer layer.

The graphene-containing layer or portion may be positioned locally at one or more areas of the packaging material that are intended to form part of sealing zones.

Said at least one graphene-based layer or portion may have a thermal conductivity of about 1-1500 W/mK, such as 20-1300 W/mK, 40-1000 W/mK, 50-500 W/mK, 50-150 W/mK, 80-130 W/mK, or 90-120 W/mK.

The present invention further relates to a method of manufacturing said non-aluminium foil laminated packaging material comprising lamination of the bulk layer, the barrier layer, said at least one innermost layer, and the outermost liquid-tight polymer layer.

The method may comprise laminating the packaging material by contacting the barrier layer comprising said vapour-deposited metal and/or metalloid layer and at least one graphene-containing layer or portion, and said at least one inner liquid-tight, heat-sealable polymer layer with one side of the bulk layer, and contacting the outermost liquid-tight polymer layer with the opposite side of the bulk layer.

Said at least one graphene-containing layer or portion of the barrier layer may be applied in-line during the packaging material laminating process, e.g., applied as a free-standing film, or supported on a non-woven polyolefin carrier, or is provided as a dispersion coating.

The present invention further relates to a packaging container comprising the non-aluminium foil laminated packaging material.

The packaging container may comprise a main body formed by the packaging material and having at least one heat seal arranged at a sealing area, wherein said at least one graphene-containing layer or portion of the packaging material is arranged at said sealing area. At said sealing area also the vapour-deposited metal and/or metalloid layer is provided, as that layer enables the seal.

Said the vapour-deposited metal and/or metalloid layer of the barrier layer is a workpiece of an associated sealing system. The associated sealing system may be involving induction heating, e.g., high-frequency induction heating, or vibration heating, e.g., ultrasonic heating.

The method for manufacturing the packaging container comprises heat sealing the packaging material by activating an electromagnetic device such that heat is generated in said in the vapour-deposited metal and/or metalloid layer, i.e., said workpiece of the associated sealing system, of said packaging material, or heat sealing the packaging material by activating an ultrasonic device such that heat is generated in said in the vapour-deposited metal and/or metalloid layer, i.e., said workpiece of the associated sealing system, of said packaging material.

During the method for manufacturing the packaging container there is provided dissipation of heat via said at least one graphene-containing layer or portion during and after said heat sealing.

The electromagnetic device may be operating at a frequency from 100 kHz to 27 MHz, such as from 1 MHz to 27 MHz, such as from 13 MHz to 27 MHz.The ultrasonic device may be operating at a frequency from 15 kHz to 50 kHz, such as 20-40, or 25-35 kHz.

### Brief description of the drawings

Figures 1a, 1b, 1c, and 1d schematically show cross-sections of barrier layers suitable for use in embodiments of the invention.
Figures 2a and 2b schematically show in cross-section a laminated packaging material according to the invention.
Fig. 3 shows schematically a method for coating a graphene-containing composition, and a vapour-deposited metal and/or metalloid layer, onto a substrate in forming the barrier layer of Fig. 1a.
Fig. 4a shows schematically a method for melt extrusion laminating together two material webs by means of an intermediate thermoplastic polymer in forming the laminated packaging material of Figs. 2a,b.
Fig. 4b shows schematically a method, for melt co-extrusion coating layer(s) of a thermoplastic polymer onto a web substrate, e.g. to form innermost and outermost layers of the laminated packaging material of Figs. 2a and 2b.
Fig. 5 shows a typical example of a liquid carton packaging container produced from the laminated packaging material of Figs. 2a, and 2b.
Fig. 6 shows the principle of how such liquid carton packaging container is manufactured from the packaging laminate in a continuous, roll-fed, form-fill-seal process.
Fig. 7 is a cross-sectional view of a sealing system for use with a packaging machine to form packaging containers of Fig. 5.
Fig. 8 is a graph of a comparison between aluminium foil and graphene layer in view of temperature change vs. cooling increase.

### Detailed description

### Definitions

With the term "long-term storage", used in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may cause deterioration of the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container.

Regarding the laminated packaging material itself, the integrity property is thus generally focused on the ability to withstand thermal- and mechanical loads e.g., during folding and sealing, without fracturing. More specifically, good adhesion is needed between the respective laminate layers and its adjacent layers, as well as high quality of the individual material layers. Regarding the sealing of the packages, the integrity is mainly focused on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, wine, soups, jalapenos, tomatoes, sauce (such as pasta sauce), beans and olive oil are some non-limiting example of food products contemplated.

The term "aseptic" in connection with a packaging material and packaging container refers to conditions where microorganisms are eliminated, inactivated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

The term "non-aluminium foil" in connection with a packaging material means that the packaging material does not comprise an aluminium foil of a thickness in the micrometre-scale, such as conventional aluminium foils for liquid carton packaging which are normally from 6 to 9 µm thick. A "non-aluminium foil" packaging material may comprise a vapour-deposited metal layer, however, as the thickness of e.g. an aluminium vapour-deposited metal layer is in the nanometre-scale, the amount of aluminium material employed in such a vapour-deposited metal layer is very low, and has, in comparison to aluminium foils, a significantly reduced impact on recycling and exploitation of material resources.

The term "thermomechanical stability" in connection with a material or a material layer means that the material has the ability to maintain mechanical stability and geometry at elevated temperatures, including during shaping or forming the material (such as pressing, folding, heat sealing). Furthermore, the material will not melt or soften upon heating to predetermined temperatures.

With the term "bulk layer" is normally meant the thickest layer or the layer containing the most material in a multilayer laminate, i.e. the layer which is contributing most to the mechanical properties and the dimensional stability of the laminate and of packaging containers folded from the laminate, such as paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties and dimensional stability.

The term "workpiece" refers to a portion or layer configured to generate heat losses by means of a magnetic field produced by an electromagnetic device, such as an inductor, or to generate heat losses by means of vibrations, such as ultrasonic acoustic vibrations from an ultrasonic device. The ultrasonic device may have a piezoelectric transducer to generate the ultrasonic acoustic vibrations. The associated sealing system connected to the workpiece may be a transversal sealing system and/or a longitudinal sealing system including either an electromagnetic sealing device, or an ultrasonic sealing device.

A heat seal is a joint between two opposing polymer material surfaces, where the materials have been welded or joined together by heating the polymer material surface while pressing together, such that the two opposing surfaces of polymer material were locally melted and the respective molecules forced to inter-diffuse with each other, under the application of simultaneous heat and pressure. This means that the polymer molecules of the two polymer materials became more mobile under the influence of heat, i.e. that the molten polymer surfaces could "inter-diffuse" with each other before immediately being cooled down again while in the inter-diffused (fused, inter-dispersed) state.

Packaging laminates provided with vapour-deposited metal layer(s) can show sealing problems when sealed using HFIH and US sealing techniques as the heat generated in the sealing area may be too much. The present invention provides a structure and a way of improving the cooling of a seal, resulting in improved robustness, and integrity of a final package. A graphene-containing layer is provided in the proximity of a metallised layer as a thermally conductive layer to drain the heat and increase the cooling rate. The position of the graphene-containing layer in the proximity of the metallised layer means that the layers are positioned in the vicinity, i.e., near each other. It may be that said graphene-containing layer and metallised layer are positioned adjacent to each other, or there may, e.g., be one, two, or three layers positioned between said graphene-containing layer and metallised layer. The graphene-containing layer in paper barrier packaging material enhances the cooling rate of the package both with HFIH and US sealing. The graphene-containing layer may be used in proximity of the metallisation in a polymer barrier, enabling the use of US and HFIH in such a set-up. In this way, HFIH applied to a polymer barrier can be applied where it today is not possible to be used, since the heat is distributed over a larger area and the peak temperature can be reduced to prevent the melting of the barrier polymer substrate, or any further barrier polymers.

The conductivity of graphene is considerably higher with respect to polymers. The present formulation of the graphene-containing layer or portion allows for an impressive combination of thermal conductivity performance and compatibility, with good adhesion properties, with polyethylene as well.

The present invention provides a non-aluminium foil laminated packaging material for packaging of liquid or semi-liquid food products. The laminated packaging material comprises:
- a barrier layer comprising a vapour-deposited metal and/or metalloid layer and at least one graphene-containing layer or portion being in proximity of the vapour-deposited metal and/or metalloid layer, and
- an inner liquid-tight, heat-sealable polymer layer, intended for product contact;

wherein said at least one graphene-containing layer or portion comprises a graphene-based material, and a polymer base, and
wherein the polymer base is selected from the group consisting of polyolefins, polyamides, polyesters, epoxide resins, polyurethanes, polystyrene, polycarbonate, acrylics, acrylates, or any combination thereof.

The vapour-deposited metal and/or metalloid layer may be induction heat susceptible or susceptible to heat generated using ultrasound, and the laminated packaging material is suitable for induction heat sealing, and/or ultrasonic sealing.

The packaging material may further comprise at least one of an outermost liquid-tight polymer layer, and a bulk layer of paper, paperboard, or other cellulose-based material.

The graphene-based material present in said at least one graphene-containing layer or portion may be selected from the group predominantly comprising, such as consisting of, exfoliated flakes of graphene, graphene monolayer material, or multilayer graphene platelets, having up to 20, such as 10 or fewer, stacked monolayer flakes of graphene, or any combination thereof. Exfoliated flake-shaped graphene is obtainable e.g. by exfoliation of graphite particles by microfluidic exfoliation or electrochemical expansion or ultrasonic exfoliation. Depending on the nature and performance of the exfoliation process the proportion of pure monolayer graphene flakes vs such multilayer graphene flakes may vary. The graphene-based material preferably contains no or only minor amounts of other carbon-based components selected from graphite, graphene oxide, and/or reduced graphene oxide. By minor amounts is in this context meant below 5 weight-%, such as below 3 weight-%, below 1 weight-%, or below 0.05 weight-%, based on dry weight, of the graphene-based material.

Said at least one graphene-containing layer or portion may comprise the graphene-based material in an amount of 10-90 weight-%, such as 25-85 weight-%, 30-80 weight-%, 35-75 weight-%, or 30-70 weight-%, based on dry solids content.

Said at least one graphene-containing layer or portion preferably contains no other inorganic component in a substantial or traceable or measurable amount.

Said at least one graphene-containing layer or portion may provide the packaging material with heat transporting properties, allowing sealing to be performed while reducing the risk of negative effects on polymeric layers or the metallised layer in the packaging laminate due to any overheating during the sealing processes. Said at least one graphene-containing layer or portion is thus an active part during sealing of the packaging material, as the graphene-containing layer or portion participates in the heat transfer and allows heat to be removed from the vapour-deposited metal and/or metalloid layer and/or polymer layers in the proximity of said at least one graphene-containing layer or portion. Liquid-tight, heat-sealable polymer layers are thus allowed to soften, melt, and seal the packaging being formed, without risking overheating during the sealing process and providing sealing flaws in the packaging material. The presence of said at least one graphene-containing layer may also provide barrier properties, such as oxygen barrier properties, and may also provide light barrier properties, when applied as a full layer and not just as a portion of a full covering layer. When using graphene, cohesion and adhesion are of utmost importance. To allow efficient heat transfer in the material, a low sheet resistance is preferred. A low sheet resistance means having a high concentration of graphene, a low presence of additives, and a relatively high thickness of the graphene layer. A low sheet resistance also indicates provision of a good thermal conductivity. However, this affects properties like adhesion and cohesion. In view of a graphene-containing layer having good cohesive strength and adhesion, it is desirable to have a low concentration of graphene, a high presence of additives, and a low layer thickness. It has been found that cohesive strength and adhesion may be significantly improved by combining graphene with a polymer base, selected as indicated below. The polymer base and graphene formulation used as a graphene layer or portion provides sufficient sheet resistance, adhesion, and cohesion for a packaging material to allow sufficient heat dissipation in the material, and to have sufficient integrity of a final package after sealing. The additives, such as dispersants and property improving components, mentioned in connection herewith may aid in providing a stable, easily distributed, and efficient formulation to provide a graphene-containing layer or portion. This way, the vapour-deposited metal and/or metalloid layer is protected from heat damage in the packaging material, making the material more sustainable and recyclable as an aluminium foil is not needed to provide efficient sealing and barrier properties.

The polymer base present in said at least one graphene-containing layer or portion may be selected from the group consisting of polyethylene, polypropylene, nylon, acrylic, styrene acrylic, aliphatic polyurethane, polyurethane-styrene acrylate, or any combination thereof. The polymer base may e.g., be selected from the group consisting of aliphatic polyurethane, polyurethane-styrene acrylate, or any combination thereof. This selection of polymer bases have been found to provide good mechanical consistency and flexibility. The selection of polymer base influences the performance of the packaging material. The selection of aliphatic polyurethane, polyurethane-styrene acrylate, or any combination thereof, as base polymer allows good adhesion with polymers of the packaging material, such as polyethylene, without loosing the electrical and thermal conductivity of the graphene. As polyethylene is a major polymer component of packaging materials, as it may often used as a heat sealing layer, it is important to provide a sustainable alternative to aluminium foil barriers with aid in the sealing process, and recyclable packaging materials. The present at least one graphene-containing layer or portion comprising said polymer base provides good adhesion between layers, such as to the vapour-deposited metal and/or metalloid layer, and allows for a stable integrity of a final package, and said at least one graphene-containing layer or portion provide higher sealing efficiency compared to the standard material for sealing, such as metal foil layers, as the graphene-containing layer or portion efficiently eliminates the risks of overheating the packaging material and damaging the vapour-deposited metal and/or metalloid layer or polymer layers therein.

Said at least one graphene-containing layer or portion may comprise the polymer base in an amount of about 1-90 weight-%, such as 2-80 weight-%, 5-70 weight-%, 10-60 weight-%, or 15-50 weight-%, based on dry solids content.

Said at least one graphene-containing layer or portion may further comprise a dispersant selected from the group consisting of starch, graphene oxide, an alkali metal salt of an acrylic polymer, a carboxylic acid polymer, an alkali metal salt of a carboxylic acid polymer, or any combination thereof. The dispersant may be a sodium salt of an acrylic polymer, a carboxylic acid polymer, a sodium salt of a carboxylic acid polymer, or any combination thereof, for example poly(acrylic acid), poly(acrylic acid) sodium salt, poly(methacrylic acid), poly(methacrylic acid) sodium salt, or any combination thereof.

The dispersant may be present in said at least one graphene-containing layer or portion in an amount of about 0.5-15 weight-%, such as 0.5-10 weight-% or 1-5 weight-%, based on dry solids content.

Said at least one graphene-containing layer or portion may further comprise a thickening agent. Thickening agents may e.g., be selected from the group consisting of starch, xanthan gum, hydroxyethyl cellulose (HEC) and carboxymethyl cellulose (CMC), or any combination thereof. E.g. starch has also a dispersing effect keeping the graphene from agglomerating.

Said at least one graphene-containing layer or portion may comprise the thickening agent in an amount of about 0.5-15 weight-%, such as 0.5-10 weight-% or 1-5 weight-%, based on dry solids content.

Said at least one graphene-containing layer or portion may further comprise a property improving component selected from the group consisting of polyetherimide, PVOH, PVOH copolymers, polyethylene, such as low molecular weight PE, or any combination thereof.

The property improving component may be present in said at least one graphene-containing layer or portion in an amount of about 0.5-15 weight-%, such as 0.5-10 weight-% or 1-5 weight-%, based on dry solids content.

The thickness of said at least one graphene-containing layer or portion may be in the range of 0.001-500 µm, such as 0.001-300 µm, 0.01-300 µm, 0.001-100 µm, 0.05-100 µm, 0.001-50 µm, 0.01-50 µm, 0.1-50 µm, 0.5-40 µm, 1-35 µm. The thickness range relates to dry material thicknesses. The exact thickness and resistivity can vary depending on the desired efficiency, current, quality factor, and sealing system properties, such as power signal frequency, etc.

The vapour-deposited metal and/or metalloid layer is applied by means of physical vapour deposition (PVD) or less preferably by atomic layer deposition (ALD), which is a slower coating method. The thin metal vapour deposition coatings used herein are nanometre-thick, i.e. have a thickness that is most suitably counted in nanometres, for example of from 1 to 500 nm, preferably from 10 to 100 nm, more preferably from 15 to 80 nm and most preferably from 20 to 50 nm.

Generally, below 5 nm the induction heat sealing durable properties may be too low to be useful and above 200 nm, the coating may be less flexible and, thus, more prone to cracking when applied onto a flexible substrate.

The most preferred metal according to the present invention is aluminium. However, any other metal capable of being vapour deposited into a homogeneous coating may be used. The vapour-deposited metal and/or metalloid layer may comprise a metal and/or metalloid compound selected from aluminium, silicon, or any oxides thereof, or any combination thereof. Examples of suitable metals and metal oxides may be selected from aluminium, aluminium oxide, silicon oxide, or any combination thereof. However, less preferred and less common metals such as Au, Ag, Cr, Zn, Ti or Cu are conceivable also.

Normally, an aluminium metallised layer inherently has a thin surface portion consisting of an aluminium oxide due to the nature of the metallisation coating process used.

Suitably, the vapour-deposited metal layer has an optical density (OD) of from 1 to 5, preferably of from 1.5 to 3.5, more preferably from 2 to 3. At an optical density lower than 1.8, the barrier properties of the vapour-deposited metal layer may be too low and at an OD lower than 2.0, the sheet resistance may be too high. At an OD above 4, the vapour-deposited metal layer may become more sensitive to mechanical stress and less flexible.

Suitably, the vapour-deposited metal layer has a sheet resistance between 0.1 and 1.5 Ω/□, preferably between 0.25 and 1.2 Ω/□, more preferably between 0.4 and 0.8 Ω/□ e.g. 0.5 Ω/□. For the purpose of induction heat sealing, the sheet resistance of the vapour-deposited metal layer should be as low as possible, but there is a practical lower limit to what is possible.

The vapour-deposited metal layer preferably has a thickness of from 5 to 100 nm, more preferably from 20 to 50 nm, which is considerably less than the aluminium metal material present in an aluminium foil of conventional thickness, i.e. 6.3 µm. The amount of aluminium material employed in such a vapour-deposited metal layer is very low, and has, in comparison to aluminium foils, a significantly reduced impact on recycling and exploitation of material resources.

In order to improve the adhesion of the vapour-deposited metal layer, a step of surface treatment may be carried out before vapour deposition coating.

The vapour-deposited metal layer may in some embodiments be deposited as two consecutive deposition coatings, for increased quality and flexibility.

In addition to allowing sealing, the vapour-deposited metal layer provides light and humidity barrier properties.

The barrier layer may contain multiple layers. The barrier layer may in addition to said a vapour-deposited metal and/or metalloid layer and at least one graphene-containing layer or portion further comprise at least one paper barrier material layer and/or at least one polymer barrier material layer. The barrier layer may also further contain intermediate and/or adhesive layers.

The wording "paper barrier material layer" is herein intended to include papers, paperboard or other cellulose-based substrates. Cellulose-based substrates may be based on any type of native cellulose, fibrous or fibrillar cellulose. A suitable paper or cellulose-based substrate for such a paper barrier material should be thin, such as 60 g/m² or below, such as 50 g/m² or below, and preferably 45 g/m² or below. It may be preferred to use papers having a grammage of from 30 to 50 g/m², such as from 35 to 45 g/m². The paper barrier material layer may have a higher density, such as above 800 kg/m³, preferably above 900 kg/m³, more preferably above 1000 kg/m³. Such high densities may be obtained by compressing the paper web in a calendering operation, preferably a supercalendering process. In a further embodiment, it may be calendered or supercalendered after base-coating or impregnating the paper substrate at its top surface with an aqueous polymer binder composition, to lock it in its compressed, high-density state. Also lower-density paper substrate may work well for the purpose of carrying gas barrier coatings, however, and may be improved depending on its surface properties and how it is first treated, e.g. by being base-coated, to obtain a smooth and compact, closed surface structure.

The paper barrier material layer may further be coated with base coating. This base coating may be particularly important for paper barrier materials as it closes pores of the paper. The base coating layer may be a clay coating layer, i.e. a coating layer comprising an emulsion binder and high concentration of pigments or inorganic particles, such as i.a. kaolin or CaCO₃. Such claycoat layer may also be referred to as a printable pigment coating. For use in the present invention its role is to provide a smooth and dense surface, even if the purpose is not to be used as a print surface. A claycoat base coating may be used with or without an additional pre-coating layer as discussed below; the vapour-deposited metal layer is preferably not applied directly to a claycoat base coating, but the optionally reduced graphene oxide can be. Alternatively, a base coating may be based on starch, starch derivatives or modified starch, or comprise a cellulose-ether, such as carboxy methyl cellulose, CMC, or hydroxyethyl cellulose, HEC. The base coating layer material needs to be relatively thermostable and resistant to melting or deterioration under influence of heating, during heat sealing.

The polymer barrier material layer be a coating or a film of e.g. polyesters, polyolefins, or any combination thereof. The polymer barrier material layer may be a substrate intended to receive and/or support said at least one graphene-containing layer or portion or said vapour-deposited metal and/or metalloid layer. Typical polyesters are polyethylene terephthalate (PET), polybutylene terephthalate (PBT), of the type polyhydroxyalkanoates (PHA) and polylactic acids (PLA). Polyolefins are preferred in view of improved recyclability of the non-aluminium foil laminated packaging material. Preferred materials for the polymer barrier material layer include mono-axially or biaxially oriented polypropylene (OPP or BoPP), mono-axially or biaxially oriented polyethylene (MoPE or BoPE), such as biaxially oriented linear low density polyethylene (BoLLDPE), biaxially oriented high density polyethylene (BOHDPE), and unoriented HDPE or LLDPE. Cast or blown such substrate films may be used. Preferably the mono-axially oriented substrate film has a stretch ratio from 3 to 12, more preferably 4 to 8, in the machine direction (MD). In the alternative embodiment where the film is biaxially oriented, a suitable stretch magnification ratio (i.e. stretch ratio in MD : stretch ratio in cross direction) is 3 to 12, preferably 5 to 12.

The polymer barrier material layer may comprise filler and/or may be a cavitated film, such as cavitated OPP.

Suitably, the thickness of the polymer barrier material layer may be 10 to 30 µm, more preferably 15 to 25 µm, e.g. 16, 18, 20 or 23 µm. It is important to the openability of a laminated packaging material that the substrate film not be too thick, whilst still providing good mechanical properties. This is particularly the case for oriented films. A thin film is also desirable to minimise the polymer content of the laminate.

The polymer barrier material layer suitably has a melting point higher than that of the heat seal layer(s), for example higher than 120 °C, such as higher than 125°C.

A paper or paperboard bulk layer for use in the invention usually has a thickness of from about 100 µm up to about 600 µm, and a surface weight of approximately 100-500 g/m², preferably about 200-300 g/m², and may be a conventional paper or paperboard of suitable packaging quality.

For low-cost aseptic, long-term packaging of liquid food, a thinner packaging laminate may be used, having a thinner paper core layer. The packaging containers made from such packaging laminates are not fold-formed and more similar to pillow-shaped flexible pouches. A suitable paper for such pouch-packages usually has a surface weight of from about 50 to about 140 g/m², preferably from about 70 to about 120 g/m², more preferably from 70 to about 110 g/m².

Suitable thermoplastic polymers for the outermost and innermost heat-sealable liquid-tight layers may be polyolefins such as polyethylene and polypropylene, provided as homo- or co-polymers. The polyethylenes may be classified based on their molecular weight distribution, e.g., monomodal, bimodal, or trimodal. Preferably the outermost and innermost heat-sealable liquid-tight layers may be polyethylenes, and more preferably polyethylenes selected from the group consisting of low density polyethylene (LDPE), linear LDPE (LLDPE), single site catalyst metallocene polyethylenes (mPEs, such as m-LLDPE), and any blends or copolymers thereof. Within the metallocene polyethylenes is also included polyethylenes obtained using constrained geometry catalyst (CGC) systems. Preferably the thermoplastic polymer may be selected from LDPE, LLDPE, mLLDPE, or any combination thereof. The outermost and innermost heat-sealable liquid-tight layers, each, mainly consists of said thermoplastic polymers. According to an embodiment, the outermost heat-sealable and liquid-tight layer is an LDPE, while the innermost heat-sealable, liquid-tight layer is a blend composition of m-LLDPE and LDPE for optimal lamination and heat sealing properties. If the at least one inner liquid-tight, heat-sealable polymer layer contains e.g. 2 or 3 layers, the innermost heat-sealable, liquid-tight layer is preferably a blend composition of m-LLDPE and LDPE, while the subsequent superimposed or attached inner layer(s) may be selected from HDPE, MDPE, LDPE, LLDPE or any combination, or any mixture thereof. For example, the inner layer superimposed or attached on the innermost heat-sealable, liquid-tight layer may be selected from HDPE, MDPE, LDPE, or any combination thereof, such as LDPE, or a mixture of HDPE/LDPE or MDPE/LDPE. For example, the additional inner layer superimposed or attached on the inner layer superimposed on the innermost heat-sealable, liquid-tight layer may be selected from HDPE, MDPE, LDPE, or any combination thereof, such as HDPE, MDPE, LDPE, or a mixture of HDPE/LDPE, MDPE/LDPE, or HDPE/MDPE. When the layers are superimposed, there may be provided an adhesive layer in between, but it is not mandatory.

The packaging material may further comprise at least one intermediate polymer layer. The intermediate polymer layer(s) may have adhesive effects to increase adhesion between adjacent layers, and/or contribute to increased barrier effects, such as improved oxygen barrier effects.

The same thermoplastic polyolefin-based materials, as listed regarding the outermost and innermost layers, and in particular polyethylenes, may be provided as intermediate polymer layers, which are also suitable in bonding layers interior of the laminated material, i.e. between a bulk layer, such as paper or paperboard, and a barrier material layer or sheet. Intermediate polymer layer(s) may also be present within the barrier layer.

In an embodiment, the thermoplastic bonding layer may be a polyethylene layer, such as a low density polyethylene (LDPE) layer. It may typically be applied at an amount from 10 to 25 µm, such as from 10 to 20 µm, such as from 10 to 15 µm.

In addition to intermediate layers comprising or mainly consisting of said thermoplastic polyolefin-based materials, the intermediate layers may comprise or mainly consist of a compound selected from modified polyolefins, such as graft co-polymers of polyethylene or polypropylene with functional group containing carboxylic monomer units, e.g., (meth)acrylic acid monomers or maleic anhydride (MAH) monomers. Preferred modified modified polyolefins are ethylene acrylic acid copolymers (EAA), ethylene methacrylic acid copolymer (EMAA)), ethyleneglycidyl(meth)acrylate copolymer (EG(M)A), maleic anhydride grafted (MAH-g) polyethylene, or any combination thereof, and especially selected from ethylene acrylic acid copolymers (EAA), ethylene methacrylic acid copolymer (EMAA)), maleic anhydride grafted (MAH-g) low density polyethylene, or any combination thereof. These intermediate polymer layers are suitable bonding or tie layers in the interior of the laminated material, such as for example provided within the barrier material layer, between the bulk layer and the barrier material layer, and/or between the inner liquid-tight, heat-sealable polymer layer and the bulk layer. These intermediate layers may be present between the vapour-deposited metal and/or metalloid layer and said at least one graphene-containing layer or portion. Such intermediate polymer layers may also be provided between the outermost liquid-tight polymer layer and the bulk layer.

The packaging material may be further improved from a barrier perspective by inclusion of further barrier materials like EVOH, and/or PVOH, which may be used as additional layers in the barrier layer to further improve the barrier performance, e.g. in view of e.g., oxygen transmission (OTR), and also adhesion. Such EVOH and/or PVOH layers may be provided as films or coatings to the barrier layer. Such EVOH and/or PVOH layers may preferably be provided between a paper barrier material or a polymer barrier material, and said at least one graphene-containing layer or portion, or said vapour-deposited metal and/or metalloid layer. Thus, intermediate layers, as mentioned above, may be positioned between a paper barrier material or a polymer barrier material, and said at least one graphene-containing layer or portion, or said vapour-deposited metal and/or metalloid layer, but can at this position of a packaging laminate be replaced by such EVOH and/or PVOH layers, or such EVOH and/or PVOH layers may be provided in addition to said intermediate layers.

The packaging material may in addition to the above or as an alternative to other additional barrier layers include further layers selected from graphene oxide (GO) and/or reduced graphene oxide (rGO) to improve the barrier performance. It is to be noted that such additional GO and/or rGO layers are not the same as said at least one graphene-containing layer or portion, but may be applied in addition to such.

The intermediate polymer bonding layer may bind the bulk layer to the barrier material by melt extrusion laminating the bonding polymer layer between a web of the bulk layer and a web of the barrier material, and simultaneously pressing the three layers together while being forwarded through a lamination roller nip, thus providing a laminated structure by extrusion lamination.

In another embodiment, the barrier material may be bonded to the bulk layer by wet application of an aqueous adhesive composition (which may be an intermediate polymer and/or a further barrier material) comprising an adhesive polymer binder onto one of the web surfaces to be laminated, and pressing the two webs together while they are forwarded through a lamination roller nip, thus providing a laminated structure by wet lamination. The moisture of the aqueous adhesive composition is absorbed into the fibrous cellulose network of the bulk paperboard, and partly evaporates with time, during the subsequent lamination processes. There is thus no need for a forced drying step.

The barrier layer may be positioned in the proximity of, such as adjacent, said at least one inner liquid-tight, heat-sealable polymer layer, e.g., said at least one graphene-containing layer or portion may be positioned between, i.e., sandwiched between, said paper barrier material layer or polymer barrier material layer, and said at least one inner liquid-tight, heat-sealable polymer layer.

The outermost and/or innermost layers are preferably applied by extrusion coating.

The innermost liquid-tight, heat-sealable polyolefin layer may be a pre-manufactured film comprising the same or similar polyolefins, as described above (e.g. LLDPE), for improved robustness of the mechanical properties of the packaging material. Due to the manufacturing process in film blowing and film casting operations, and optional subsequent film orientation operation steps, the polymers of such films acquire different properties from what is possible from co-extrusion coated polyolefin layers. Such a pre-manufactured polymer film thus contributes to the mechanical robustness of a laminated packaging material and to mechanical strength and package integrity of formed and filled packaging containers from the laminate packaging material.

The graphene-containing layer or portion may be positioned locally at one or more areas of the packaging material that are intended to form part of sealing zones.

Said at least one graphene-based layer or portion may have a thermal conductivity of about 1-1500 W/mK, such as 20-1300 W/mK, 40-1000 W/mK, 50-500 W/mK, 50-150 W/mK, 80-130 W/mK, or 90-120 W/mK.

### Preferred Layer Arrangements of Barrier Material

Preferred layer arrangements of the barrier layer include:
- vapour-deposited metal and/or metalloid layer/at least one graphene-containing layer or portion,
- Polymer or paper barrier material layer / vapour-deposited metal and/or metalloid layer / at least one graphene-containing layer or portion,
- Polymer or paper barrier material layer / at least one graphene-containing layer or portion / vapour-deposited metal and/or metalloid layer,
- Polymer or paper barrier material layer / intermediate layer(s) or further barrier material / vapour-deposited metal and/or metalloid layer / intermediate layer(s) / at least one graphene-containing layer or portion,
- Polymer or paper barrier material layer / intermediate layer(s) or further barrier material / at least one graphene-containing layer or portion / intermediate layer(s) / vapour-deposited metal and/or metalloid layer,
- Paper barrier material layer / base coating / intermediate layer(s) or further barrier material / at least one graphene-containing layer or portion / vapour-deposited metal and/or metalloid layer,
- Paper barrier material layer / base coating / intermediate layer(s) or further barrier material / vapour-deposited metal and/or metalloid layer / at least one graphene-containing layer or portion.

More explicit examples are:
- Polyolefin polymer barrier material layer / at least one graphene-containing layer or portion / vapour-deposited metal and/or metalloid layer,
- Polyolefin polymer barrier material layer / vapour-deposited metal and/or metalloid layer / at least one graphene-containing layer or portion,
- Polyolefin polymer barrier material layer / intermediate layer of (modified) polyolefins / at least one graphene-containing layer or portion / vapour-deposited metal and/or metalloid layer,
- Polyolefin polymer barrier material layer / intermediate layer of (modified) polyolefins / vapour-deposited metal and/or metalloid layer / at least one graphene-containing layer or portion,
- Paper barrier material layer / optional base coating / intermediate layer of (modified) polyolefins or further barrier material / at least one graphene-containing layer or portion / vapour-deposited metal and/or metalloid layer,
- Paper barrier material layer / optional base coating / intermediate layer of (modified) polyolefins or further barrier material / vapour-deposited metal and/or metalloid layer / at least one graphene-containing layer or portion.

Preferable barrier layers include structures such as paper barrier material/PVOH/graphene-containing layer/ vapour-deposited metal and/or metalloid layer, or paper barrier material/PVOH/ vapour-deposited metal and/or metalloid layer /graphene-containing layer, having the paper barrier material layer towards the bulk layer and the metallisation (metal and/or metalloid layer) or graphene-containing layer is towards the inside layers of the packaging material, and wherein intermediate layers, e.g. of modified polyolefins, may be present between the layers to improve adhesion.

A method of manufacturing a non-aluminium foil laminated packaging material is provided. The method comprises laminating the packaging material by contacting the barrier layer comprising said vapour-deposited metal and/or metalloid layer and at least one graphene-containing layer or portion, and said at least one inner liquid-tight, heat-sealable polymer layer with one side of the bulk layer, and contacting the outermost liquid-tight polymer layer with the opposite side of the bulk layer.

The method comprises a step of laminating one or more heat sealable layers of thermoplastic material to a bulk layer, and a step of applying the barrier layer to said packaging material, wherein the vapour-deposited metal and/or metalloid layer of the bulk layer forms a workpiece of an associated sealing system. The associated sealing system relates to transversal and/or longitudinal sealing using at least one electromagnetic device or at least one ultrasonic device, and a workpiece arranged in said packaging material, wherein said workpiece is formed by the vapour-deposited metal and/or metalloid layer. Said at least one graphene-based layer or portion in the proximity of the vapour-deposited metal and/or metalloid layer aid in the sealing by dissipating heat from the sealing area.

The step of applying the graphene-based layer or portion may be performed in-line during a packaging material lamination process, or as a post-process at the end of a packaging material lamination process.

Said at least one graphene-containing layer or portion may be applied to the packaging material supported on a non-woven polymer carrier, in the form of a film, i.e. a free standing foil, and/or in the form of a dispersion coating, i.e. applied under wet conditions. The non-woven polymer carrier may be polyethylene or polypropylene. Said at least one graphene-containing layer or portion may be provided by spraying, roller coating, slot die coating, or curtain coating a graphene dispersion onto the non-woven polymer carrier, or onto a paper barrier material layer or polymer barrier material layer. More specifically, said at least one graphene-containing layer or portion of the barrier layer may be applied in-line during the packaging material laminating process, such as applied as a free-standing film, or supported on a non-woven polyolefin carrier, or is provided as a dispersion coating.

Several consecutive coating or application steps to form a thicker layer of graphene-containing layers may be needed to obtain higher thicknesses, if desired.

In a one embodiment, the bulk layer and barrier layer are laminated, followed by application of the innermost layer and then the outermost layer (or less preferably followed by application of the outermost layer and then the innermost layer). This order is referred to as "LID" wherein L= lamination of paperboard to barrier layer by intermediate bonding layer; I = application of innermost layer to barrier layer; D (décor) = application of outermost layer onto paperboard. The less preferred alternative is referred to as "LDI". Alternatively, the bulk layer may be initially joined to the outermost layer. This order is referred to as "DLI".

The polymer or paper barrier material layer may optionally be laminated to the bulk layer before application of one or more layers of the barrier layer.

The method of making the laminated packaging material may further comprise formation of the barrier layer, indicated above.

A packaging container comprising the non-aluminium foil laminated packaging material is provided. The packaging container comprises at least one heat seal.

The packaging container may comprise a main body formed by the packaging material and having at least one heat seal arranged at a sealing area, wherein said at least one graphene-containing layer or portion of the packaging material is arranged at said sealing area. At said sealing area also the vapour-deposited metal and/or metalloid layer is provided, as that layer enables the seal.

A method for manufacturing the packaging container is further provided. The method of forming a packaging container comprises heat sealing of a laminated packaging material to form at least one heat seal. The heat sealing may be longitudinal sealing and/or transverse sealing.

Said the vapour-deposited metal and/or metalloid layer of the barrier layer is a workpiece of an associated sealing system. The associated sealing system may be involving induction heating, e.g., high-frequency induction heating, or vibration heating, e.g., ultrasonic heating.

The packaging container formed from the laminated packaging material may be partly sealed, filled with liquid or semi-liquid food and subsequently sealed, by sealing of the packaging material to itself, optionally in combination with a plastic opening or top part of the package.

The laminated packaging material may be provided in the form of a web or blanks.

The method may comprise heat sealing the packaging material by activating an electromagnetic device such that heat is generated in the vapour-deposited metal and/or metalloid layer, i.e. the workpiece, of said packaging material, or heat sealing the packaging material by activating an ultrasonic device such that heat is generated in the vapour-deposited metal and/or metalloid layer, i.e. the workpiece, of said packaging material.

In one embodiment, the method comprises the steps of:
- providing the laminated packaged material in the form of a continuous web,
- forming the web-formed packaging laminate into a continuous tubular shape and applying a longitudinal seal by means of induction or ultrasonic heating (preferably by induction heat sealing) in the longitudinal direction,
- filling the packaging laminate tube with a liquid foodstuff,
- forming heat-sealing zones by means of induction or ultrasonic heating (preferably by induction heat sealing), at predetermined intervals in the traversing direction of the filled tube, and
cutting through the centre of each traversing sealing zone, thereby forming individual containers.

In another embodiment, the method comprises:
- providing the laminated packaging material in the form of pre-cut blanks with prepared, creased folding lines, each blank corresponding to one packaging container to be formed, having side walls, bottom and top panels, divided by the folding lines,
- folding to bring the longitudinal incision edges of the packaging container blank to overlap with each other,
- applying heat to seal the overlapping edges to each other to form a flat-folded, tubular blank having a longitudinal sealing joint by means of induction or ultrasonic heating (preferably by induction heat sealing).

These flat-folded, tubular blanks are delivered to a filling machine, which in a continued process, intermittently picks up one blank after another, erecting it to a tubular blank (capsule/ container precursor), followed by:
- fold-forming one of its top or bottom panels and heat sealing the folded panels to each other,
- filling the tubular, end-sealed blank with a liquid foodstuff,
- fold-forming the other of top or bottom panels and heat sealing (optionally by induction heat sealing) the folded panels to obtain a filled and sealed, cuboid packaging container.

Induction heat sealing is suitably carried out using an inductor (e.g. an inductor coil or other electromagnetic device) which is an AC power source. The electromagnetic device may be operating at a frequency from 100 kHz to 27 MHz, such as from 1 MHz to 27 MHz, such as from 13 MHz to 27 MHz. The ultrasonic device may be operating at a frequency from 15 kHz to 50 kHz, such as 20-40 kHz, or 25-35 kHz. The use of graphene can enable sealing in a broad range of frequency.

Regarding the sealing using ultrasonic device, the pressure, such as a static pressure at a ridge/sealing location, may be above 20 MPa. The amplitude may be 8-24 micrometer. The ultrasonic acoustic vibrations may be transmitted into the transversal sealing section for 15-130 ms.

Further, relating to the attached figures:

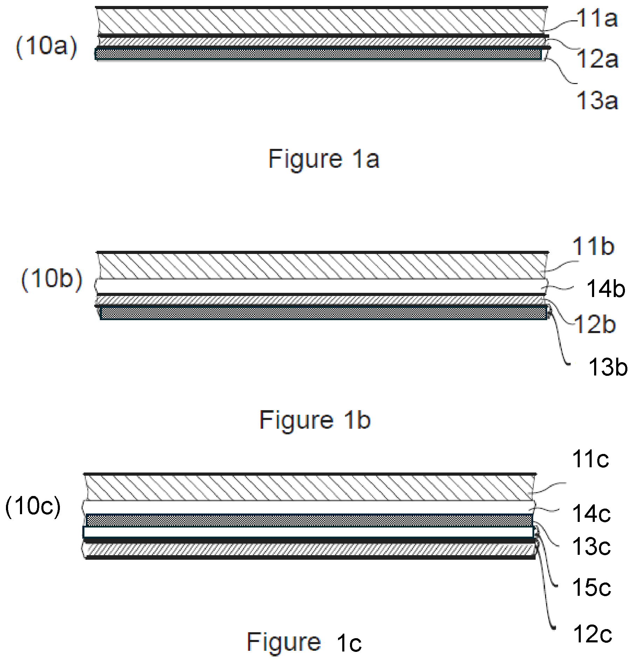

Figure 1a shows a barrier layer 10a suitable for use in preferred embodiments of the invention. The barrier layer 10a comprises (in order of adjacent layers) a paper or polymer barrier material layer 11a, at least one graphene-containing layer 12a (comprising at least graphene, and polymer base, and optionally additives like dispersants and/or property improving components), and a vapour-deposited metal and/or metalloid layer 13a.

Alternatively, the barrier layer may also solely consist of the at least one graphene containing layer 12a, and the vapour-deposited metal and/or metalloid layer (13a) (not shown).

In figure 1b the barrier layer 10b, in addition to the features paper or polymer barrier material layer 11b, at least one graphene-containing layer 12b, and a vapour-deposited metal and/or metalloid layer 13b similar to Fig.1a, include an intermediate bonding layer 14b comprising (optionally modified) polyethylenes, e.g., PE, EAA, or MAH-g PE. Alternatively, when the barrier layer is a paper barrier material layer the intermediate bonding layer 14b, may be exchanged for a further barrier layer, e.g. selected from PVOH or EVOH (not shown). Especially, if the barrier material layer is made of polymer, the intermediate bonding layer 14b may not be needed, and may be excluded, as shown in Fig 1a.

In figure 1c the barrier layer 10c, in addition to the features paper or polymer barrier material layer 11c, at least one graphene-containing layer 12c, and a vapour-deposited metal and/or metalloid layer 13c similar to Fig.1b, and possible exchange of intermediate bonding layer 14c to a further barrier layer, e.g. selected from PVOH or EVOH (not shown), include a further intermediate bonding layer 15c comprising (optionally modified) polyethylenes, e.g., PE, EAA, or MAH-g PE.

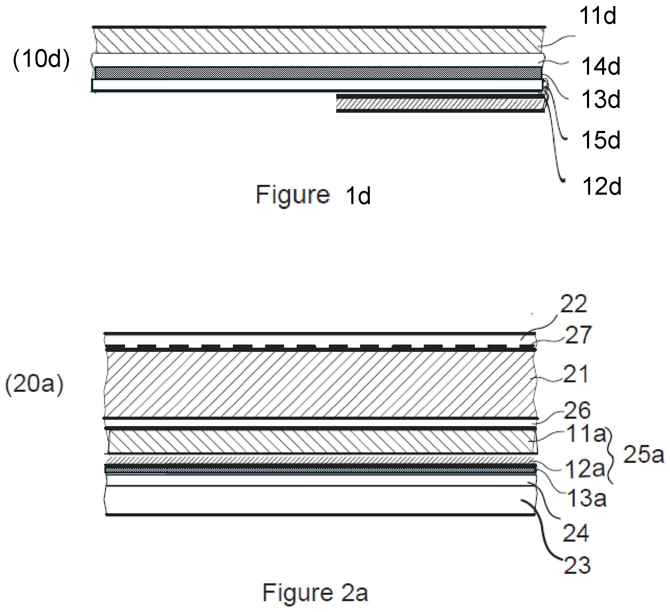

In figure 1d the barrier layer 10d, in addition to the features paper or polymer barrier material layer 11d, at least one graphene-containing layer 12d, and a vapour-deposited metal and/or metalloid layer 13d similar to Fig.1c discloses the at least one graphene-containing layer 12d as a graphene-containing portion, and not a full layer. The portion is intended to be provided at sealing zones, where packaging seals are to be provided in the provision of a sealed package.

In figure 2a, a laminated packaging material 20a for liquid carton packaging is shown, in which the laminated material comprises a paperboard bulk layer 21 of paperboard, (in the examples herein having a bending force of 80 mN and a grammage weight of about 200 g/m²), and further comprising an outer liquid-tight and heat-sealable layer 22 of polyolefin applied on the outside of the bulk layer 21, which side is to be directed towards the outside of a packaging container produced from the packaging laminate. The layer 22 is transparent to show a printed décor pattern 27, applied onto the bulk layer of paper or paperboard, to the outside, thus informing about the contents of the package, the packaging brand and other information targeting consumers in retail facilities and food shops. The polyolefin of the outer layer 22 may be a conventional low density polyethylene (LDPE) of a heat-sealable quality, but could also include further similar polymers, including LLDPEs. It may e.g., be applied at an amount of about 8-16 g/m², such as about 12 g/m². An innermost liquid-tight and heat-sealable layer 23 is arranged on the opposite side of the bulk layer 21, which is to be directed towards the inside of a packaging container produced from the packaging laminate, i.e. the layer 23 will be in direct contact with the packaged product. The thus innermost heat-sealable layer 23, which is to form strong transversal heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene LLDPE (m-LLDPE). It may e.g., be applied in an amount of 15-25 g/m², such as about 20-22 g/m².

The bulk layer 21 is laminated to the barrier layer 25a (10a of figs. 1a) by an intermediate bonding layer 26, e.g. a low density polyethylene (LDPE). The intermediate bonding layer 26 is formed by means of melt extruding it as a thin polymer melt curtain between the two webs, and thus laminating the bulk paperboard layer and the barrier layer to each other, as all three layers pass through a cooled press roller nip. The thickness of the intermediate bonding layer 26 may e.g., be from 10-25 µm, such as 12 to 18 µm, or 12-15 µm.

The innermost heat-sealable layer 23 may consist of one layer or alternatively of two or more part-layers of the same or different kinds of LDPE or LLDPE or blends thereof, and is well adhered to the surface of the barrier layer 25a by an intermediate co-extruded intermediate bonding layer (a tie layer) 24, e.g. of ethylene acrylic acid copolymer (EAA), which is thus bonding the innermost heat-sealable layer(s) to the graphene-containing layer surface of the barrier layer 25a, in applying the layers together in a single melt co-extrusion coating step.

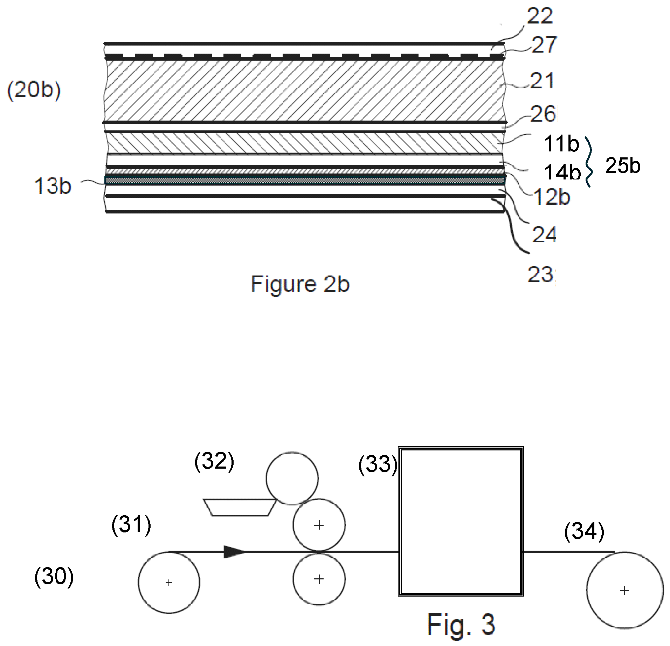

In figure 2b, another laminated packaging material 20b for liquid carton packaging is shown, wherein the barrier layer 25b corresponds to the barrier layer 10b of Fig. 1b. The rest of the packaging material layers are the same as indicated in Fig. 2a.

Alternatively, the barrier layers 25a,b in Figs. 2a,b may be turned in the opposite direction in the laminate, i.e. with the graphene-containing layer directed towards the bulk layer and the outside of the laminated material. Such embodiments are presented for the barrier layers 10c,d in figures 1c,d and may be combined with the additional layers of the packaging material of figures 2a,b (not shown).

In Fig. 3, a process of preparing an example of the barrier layer 10a is shown. The paper substrate web 31 (e.g. the paper 11a from Fig. 1a) is forwarded to the graphene containing layer coating station 32, where the graphene-containing composition may be applied by means of rollers onto the top surface of the substrate surface. Alternative ways of application, for the step 32 are spraying, roller coating, slot die coating, or curtain coating (not shown). Preferably the graphene containing layer composition 13 is applied by spraying.

Thereafter, a vapour-deposited metal and/or metalloid layer is provided in the subsequent coating station 33. The resulting barrier layer 34, 10a is forwarded and is wound up onto a reel for intermediate storage and later further lamination operations. Additional process steps may be included to provide the paper substrate web with optional base coating, and/or the barrier layer 10a may include further barrier materials like EVOH, and/or PVOH (not shown). A coating station for at least one intermediate bonding layer may also be provided (not shown), e.g. to provide a barrier layer 10b found in fig. 1b. The intermediate bonding layer compositions may be applied by extrusion coating, co-extrusion, spraying, roller coating, slot die coating, or curtain coating (not shown).

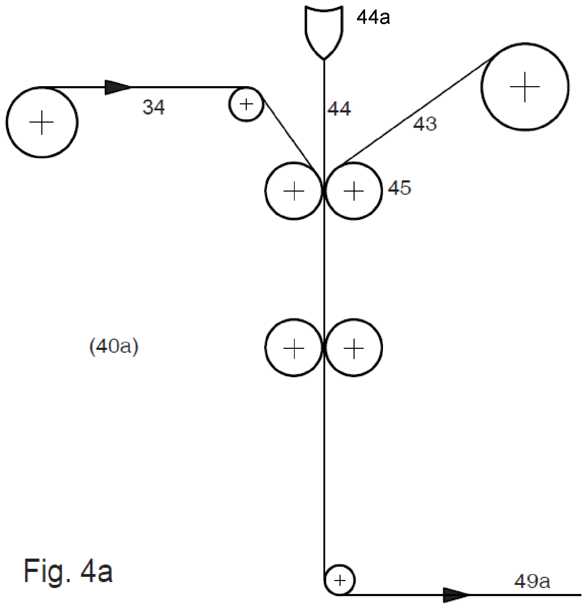

Fig. 4a shows a process 40a for the lamination steps in the manufacturing of the packaging laminate 20a,b, of Figs. 2a,b , as the bulk layer 21; 43 is laminated to the barrier layer web 34; 10a,b of Fig. 1a,b. Barrier layers as indicated in figs.1c,d may alternatively be used in the same way.

The bulk layer 21 may be laminated to the barrier layer 10a,b by means of melt extrusion lamination as shown in this figure, or by means of wet, cold dispersion adhesive lamination, the latter method however not shown. Thus, a molten polymer curtain 44 of e.g. LDPE (an intermediate bonding layer 26 in Fig 2a,b ) is fed into a nip of lamination rollers 45, as the two webs 34 and 43 are also forwarded to the same lamination nip and joined to each other by the extruded bonding layer 44 of LDPE. The three layers are thus pressed together and joined at the nip 45, which is formed between a press roller and a chill roller, thus cooling the laminated material to properly solidify the extruded bonding layer of LDPE 44. The resulting laminated material 49a is forwarded to be wound up on a reel for intermediate storage, or directly to subsequent lamination operations.

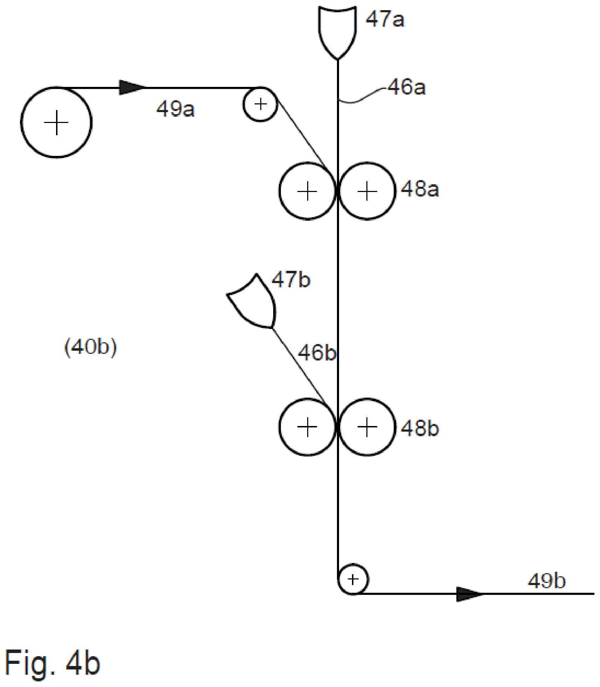

In figure 4b, the resulting pre-laminate 49a, of paperboard 21, and barrier layer web 34, is forwarded to further lamination steps 40b, either directly from the lamination operation 40a of Fig. 4a, or from engaging and unwinding from an intermediate storage reel.

The non-laminated side of the bulk layer 21, i.e. its print side, is joined at a cooled roller nip 48a to a molten polymer curtain 46a of the LDPE, which is to form the outermost layer 22 of the laminated material, the LDPE being extruded from an extruder feedblock and die 47a. Subsequently, the paper pre-laminated web, now having the outermost layer 22 coated on its printed side, the outside, passes a second extruder feedblock and die 47b and a lamination nip 48b, where a molten polymer curtain 46b is joined and coated onto the other side of the pre-laminate, i.e. on uncoated, inner side of the barrier layer web 10a,b. Thus, the innermost heat-sealable layer(s) 23 are co-extrusion coated onto the inner side of the barrier-coated substrate material web, to form the finished laminated packaging material 49b, which is finally wound onto a storage reel (not shown). Upon provision of the the innermost heat-sealable layer(s) 23, an intermediate co-extruded intermediate bonding layer (a tie layer) 24, e.g. of ethylene acrylic acid copolymer (EAA), bonding the innermost heat-sealable layer(s) to the graphene-containing layer surface of the barrier layer 10a,b may be provided before or at the lamination nip 48b to improve the adhesion between the layers (not shown).

These two co-extrusion steps at lamination roller nips 48a and 48b may alternatively be performed as two consecutive steps in the opposite order.

According to another embodiment, one or both of the outermost layers may instead be applied in a pre-lamination station, where the co-extrusion coated layer is first applied to the outside of the (optionally printed) bulk paperboard layer or onto the inner surface of the barrier-coated paper substrate, and thereafter the two pre-laminated paper webs may be joined to each other, as described above, in connection to Fig. 4a.

According to a further embodiment, the innermost layers of the heat sealable and liquid-tight thermoplastic layers may be applied in the form of a pre-manufactured film, which is laminated to the barrier layer 10a,b.

As explained in connection to Figs. 2a,b , the innermost layer pre-manufactured film 23 may be laminated to the barrier layer 10a,b by means of wet, cold dispersion adhesive lamination, or by means of melt extrusion lamination.

The same procedure as in Figs. 4a and 4b may be applied with a barrier layer 10c,d.

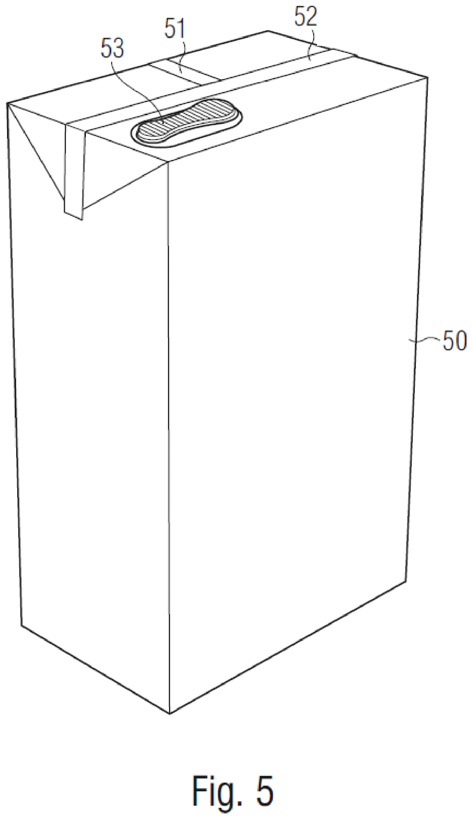

Fig. 5 shows an embodiment of a packaging container 50 produced from the laminated packaging material 20a,b. The workpiece, formed by means of vapour-deposited metal and/or metalloid layer 13a,b,c,d, is arranged at at least said sealing areas 51, and 52. The vapour-deposited metal and/or metalloid layer 13a,b,c,d may be distributed across the entire width and length of the packaging material 20a,b such that the vapour-deposited metal and/or metalloid layer 13a,b,c,d forms a continuous layer. The graphene-containing layer 12a,b,c may be distributed across the entire width and length of the packaging material 20a,b such that the graphene-containing layer 12a,b,c forms a continuous layer. However, in order to allow for sealing it is an option to provide the graphene-containing layer 12d only locally at the sealing areas 51, and 52, thereby forming local heat-dissipating regions at the sealing zones with workpieces formed by means of vapour-deposited metal and/or metalloid layer 13a,b,c,d, of the associated sealing systems 70 (longitudinal sealing system not shown).

The packaging container 50 is particularly suitable for beverages, sauces, soups or the like. Typically, such a package has a volume of about 100 to 1000 mL. It may be of any configuration, but is preferably brick-shaped, having longitudinal and transversal seals 51 and 52, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

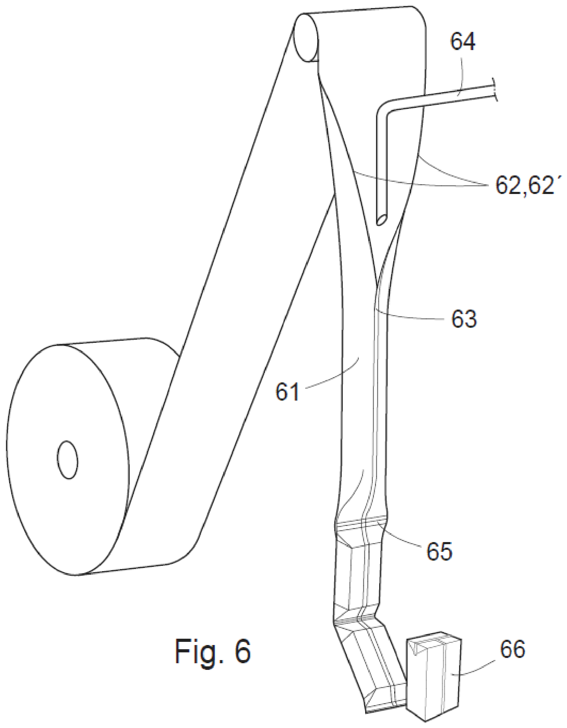

In Fig. 6, the basic principle of a roll-fed carton-based packaging machine is shown. A web of packaging material is formed into a tube 61 by overlapping the longitudinal edges 62, 62' of the web and heat sealing them to one another, to thus form an overlap joint 63. The tube is continuously filled, using item 64, e.g., a pipe, with the liquid food product to be filled and is divided into individual, filled packages by repeated, double transversal seals 65 of the tube at a predetermined distance from one another below the level of the filled contents in the tube. The packages 66 are separated by cutting between the double transversal seals (top seal and bottom seal) and are finally shaped into the desired geometric configuration by fold formation along prepared crease lines in the material. Final forming of the package container can be configured in many different ways, in order to obtain various package container shapes such as a brick-shape, a hexagonal prism, octagonal prism, tetrahedral shape, and the like.

Alternatively, a blanks fed packaging machine may be used. The blanks, in the form of pre-cut pieces of packaging material with two ends heat sealed together such that a folded tubular sleeve is formed, are fed to the filling machine. The blanks are erected into an open sleeve, and then folded and sealed such that a closed top or bottom is formed. It is thereafter filled with product and sealed and folded such that a filled package container is obtained.

It should be mentioned that the term "longitudinal" is referring to the feeding direction of the tube 61, i.e. the machine feeding direction. The term "transversal" is referring to a direction perpendicular to the longitudinal direction.

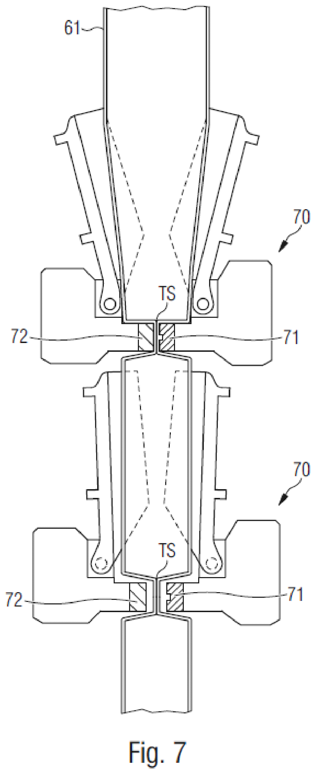

Fig. 7 shows a sealing system for use in forming transverse seals in a longitudinally sealed tube 61 of laminated packaging material of a preferred embodiment of the invention.

The transversal seals (TS) are formed by a sealing system 70. Two sets of transversal sealing systems 70 are provided, arranged in a downstream configuration (one sealing system 70 being arranged downstream another sealing system). By operation of the sealing system, a high-frequency inductor 71 and a counter element 72, positioned on movable sealing jaws, will move and press together the filled packaging material tube 61 in the transversal direction to form TS seal zones. As electromagnetics losses, e.g. eddy currents, are generated in the vapour-deposited metal and/or metalloid layer layer 13a,b,c,d workpiece of the laminated packaging material 20a,b, the inner heat seal layer 23 will be heated to form the transversal TS seal zones at every predetermined interval by high-frequency induction heating, or ultrasonic heating.

For creating the eddy currents in the workpiece, using induction heating, the inductor 71 is connected to a high frequency power supply. The inductor 71 may be operated at frequencies from 100 kHz to 27 MHz, depending on the design of the heat-sealing system. Alternatively, an ultrasonic device may be used as part of the sealing system.

It should be mentioned that the movement of the sealing jaws will also provide a forward motion of the tube 61 of laminated packaging material, whereby the seals TS will be arranged at predetermined intervals.

Then, each transversal TS seal zone is cut along a centreline by a cutting knife (not shown) and divided to form individual packaging containers.

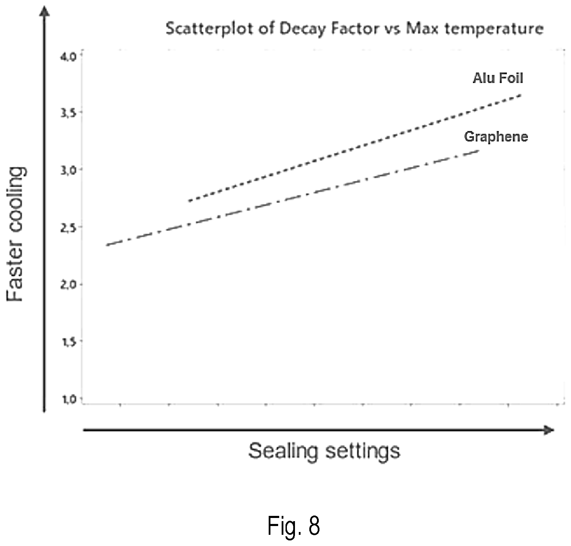

Figure 8 illustrates that graphene has a lower thermal conductivity compared to aluminium foil but is still within the same order of magnitude. However, when compared to polymers of the laminates, graphene exhibits thermal conductivity that is two orders of magnitude higher. This characteristic allows graphene to facilitate efficient heat transfer, enabling rapid cooling through fast heat dissipation. Consequently, graphene serves as a viable substitute for aluminium foil. Although a pure graphene sheet may outperform aluminium foil, it suffers from poor cohesion. Therefore, incorporating graphene with polymers is necessary. The formulation presented in this invention achieves a balanced trade-off between thermal conductivity and cohesion.

Advantages of preferred embodiments of the invention include:
The non-aluminium foil laminated packaging material provides better recyclability and a more sustainable environmental profile than aluminium foil-containing laminates. The non-aluminium foil laminated packaging material provides sufficient adhesion between layers and decreases negative effects on polymers at sealings due to faster heat dissipation from the sealing areas allowing an improved and stable integrity of a package formed therefrom. The laminated packaging material is sealable by means of induction heat sealing or ultrasonic sealing in existing filling and sealing equipment and provides good sealing properties. The laminated packaging material provides good barrier properties not only against gas and water vapour, but also towards light and odour substances. The laminated packaging material is suitable for long-term, aseptic packaging, at reasonable cost.

As a final remark, the invention is not limited by the embodiments shown and described above, but may be varied within the scope of the claims.

### Examples

### Sealing tests

Sealing tests were performed, and the sealing performances seemed to be linked to the sheet resistance. As can be seen below, the samples including free standing graphene layers show better sealing performances. This may be due to the lower sheet resistance obtained by the manufacturing process for free standing films.

The graphene-containing layer included a polymer base selected from aliphatic polyurethane (PU), and/or polyurethane (PU)-styrene acrylate, and poly(acrylic acid) sodium salt (polyAA-Na salt) as dispersant. Some of the tests further included PE additive as property improving component in the graphene-containing layer. The graphene-containing layer may be used as a free-standing film with no support, or be supported on a paper layer.

The general packaging material structure used for the tests was:
Paper board (85 mN clc/c Duplex) / 22 gms LDPE / optional Bo-LLDPE or optional paper support / 2 gsm PVOH / vapour-deposited metal and/or metalloid layer / 6 gms EAA / at least one graphene-containing layer / optional EAA / 24 gms inner layer of mPE & LDPE mixture.

The graphene-containing layer was selected from the pool of polymer base/dispersant/graphene/property improving component content, and in the form of spray coated dispersion, or free-standing film. The graphene-containing layer was evaluated with the graphene-based material in an amount of 10-90 weight-%, and the polymer base in an amount of about 1-88 weight-%, based on dry solids (DS) content. Further components of the graphene-containing layer, based on dry solids content, were selected from dispersant of about 0.5-15 weight-%, the property improving component of about 0.5-15 weight-%, and/or thickening agent of about 0.5-15 weight-%. The formulations below in Table 1 disclose a dry solids content ratio of graphene 47%, polymer base 47%. The remainder of 6% is dispersing agent, property improving agent, and/or thickening agent, based on dry solids content. Dispersing agent was herein present in an amount of about 1 weight-% based on dry solids content.

From Table 1 below, it is noted that with the present blend of graphene and polymers results were achieved reaching up to about 100 W/mK for K app, which is roughly half of the thermal conductivity of aluminium, which was used as a reference for cooling ability. These values are considerably higher compared to standard materials for packaging, where polymers normally have a K app of 0.3-0.5 W/mK, which is two orders of magnitude less. Therefore, it can be concluded that with these values of thermal conductivity, there are good chances to provide a cooling effect of the seal, reduce the sealing time for the packages, and increase production speed by including a graphene-containing layer according to the present invention.

The use of the graphene materials, which have a high thermal conductivity, allows for a broader temperature distribution. Thermal conductivity measures how well a material conducts heat, while thermal diffusivity measures how quickly heat spreads through a material. The thermal diffusivity combines thermal conductivity with the material's density and specific heat capacity. With the present graphene layers there is provided a much faster cooling and temperature relaxation as well.

The tests were performed on transversal sealing showed to investigate the sealing pattern using high frequency induction heating (HFIH).

**Table 1.**

| No. | Graphene containing layer formulation | | | Support | Thickness (µm) | Thermal diffusivity (mm²/s) | Cp (J/g°C) | K app (W/mK) |
|---|---|---|---|---|---|---|---|---|
| | Base | Dispersant | Property improving component | | | | | |
| 1 | PU-styrene acrylate | polyAA-Na salt | - | Paper | 33.5 | 61.5 | 1.31 | 96.7 |
| 2 | PU-styrene acrylate | polyAA-Na salt | - | Paper | 29 | 63.7 | 1.31 | 108.5 |
| 3 | PU-styrene acrylate | polyAA-Na salt | PE | Paper | 30.3 | 48.3 | 1.49 | 72.0 |
| 4 | PU-styrene acrylate | polyAA-Na salt | PE | Paper | 29 | 52.3 | 1.49 | 85.7 |
| 5 | aliphatic PU: PU-styrene acrylate, ratio 25:75 | polyAA-Na salt | - | None | 29.6 | 61.4 | 1.25 | 92.1 |
| 6 | aliphatic PU: PU-styrene acrylate, ratio 25:75 | polyAA-Na salt | - | None | 28.1 | 63.4 | 1.25 | 95.1 |

### Overall Results of Examples

The current tests showed that introducing graphene as a thermally conductive layer in connection with a vapour-deposited metal and/or metalloid layer has high impact on cooling time. Therefore, it can be concluded that the thermal conductivity values indicate a strong potential for enhancing the cooling effect of the seal. This improvement can reduce the sealing time for packages and increase production speed by incorporating a graphene-containing layer, as described and shown herein.

## Claims

1. A non-aluminium foil laminated packaging material (20a, 20b) for packaging of liquid or semi-liquid food products, the laminated packaging material (20a, 20b) comprising:
- a barrier layer (10a, 10b, 10c, 10d, 25a, 25b) comprising a vapour-deposited metal and/or metalloid layer (13a, 13b, 13c, 13d) and at least one graphene-containing layer or portion (12a, 12b, 12c, 12d) being in proximity of the vapour-deposited metal and/or metalloid layer (13a, 13b, 13c, 13d); and
- an inner liquid-tight, heat-sealable polymer layer (23), intended for product contact; wherein said at least one graphene-containing layer or portion (12a, 12b, 12c, 12d) comprises a graphene-based material, and a polymer base, and
wherein the polymer base is selected from the group consisting of polyolefins, polyamides, polyesters, epoxide resins, polyurethanes, polystyrene, polycarbonate, acrylics, acrylates, or any combination thereof.

2. The packaging material (20a, 20b) according to claim 1, further comprising at least one of an outermost liquid-tight polymer layer (22), and a bulk layer (21) of paper, paperboard, or other cellulose-based material.

3. The packaging material (20a, 20b) according to claim 1 or 2, wherein said graphene-based material predominantly comprises exfoliated flakes of graphene, graphene monolayer material, or multilayer graphene platelets, having up to 20, such as 10 or fewer, stacked monolayer flakes of graphene, or any combination thereof.

4. The packaging material (20a, 20b) according to anyone of the preceding claims, wherein said at least one graphene-containing layer or portion (12a, 12b, 12c, 12d) comprises the graphene-based material in an amount of 10-90 weight-%, such as 25-85 weight-%, 30-80 weight-%, 35-75 weight-%, or 30-70 weight-%, based on dry solids content.

5. The packaging material (20a, 20b) according to anyone of the preceding claims, wherein said polymer base is selected from the group consisting of polyethylene, polypropylene, nylon, acrylic, styrene acrylic, aliphatic polyurethane, polyurethane-styrene acrylate, or any combination thereof, preferably selected from the group consisting of aliphatic polyurethane, polyurethane-styrene acrylate, or any combination thereof.

6. The packaging material (20a, 20b) according to claim 5, wherein said at least one graphene-containing layer or portion (12a, 12b, 12c, 12d) comprises the polymer base in an amount of about 1-90 weight-%, such as 2-80 weight-%, 5-70 weight-%, 10-60 weight-%, or 15-50 weight-%, based on dry solids content.

7. The packaging material (20a, 20b) according to anyone of the preceding claims, wherein said at least one graphene-containing layer or portion (12a, 12b, 12c, 12d) further comprises a dispersant selected from the group consisting of starch, graphene oxide, an alkali metal salt of an acrylic polymer, a carboxylic acid polymer, an alkali metal salt of a carboxylic acid polymer, or any combination thereof, preferably a sodium salt of an acrylic polymer, a carboxylic acid polymer, an sodium salt of a carboxylic acid polymer, or any combination thereof, preferably poly(acrylic acid), poly(acrylic acid) sodium salt, poly(methacrylic acid), poly(methacrylic acid) sodium salt, or any combination thereof.

8. The packaging material (20a, 20b) according to anyone of the preceding claims, wherein said at least one graphene-containing layer or portion (12a, 12b, 12c, 12d) comprises the dispersant in an amount of about 0.5-15 weight-%, such as 0.5-10 weight-% or 1-5 weight-%, based on dry solids content.

9. The packaging material (20a, 20b) according to anyone of the preceding claims, wherein said at least one graphene-containing layer or portion (12a, 12b, 12c, 12d) further comprises a property improving component selected from the group consisting of polyetherimide, PVOH, PVOH copolymers, polyethylene, such as low molecular weight PE, or any combination thereof.

10. The packaging material (20a, 20b) according to anyone of the preceding claims, wherein said at least one graphene-containing layer or portion (12a, 12b, 12c, 12d) comprises the property improving component in an amount of about 0.5-15 weight-%, such as 0.5-10 weight-% or 1-5 weight-%, based on dry solids content.

11. The packaging material (20a, 20b) according to anyone of the preceding claims, wherein the thickness of said at least one graphene-containing layer or portion (12a, 12b, 12c, 12d) is in the range of 0.001 - 500 µm, such as 0.01 - 300 µm, 0.05 - 100 µm, 0.1-50 µm, 0.5-40 µm, or 1-35 µm.

12. The packaging material (20a, 20b) according to anyone of the preceding claims, wherein the vapour-deposited metal and/or metalloid layer (13a, 13b, 13c, 13d) comprises a metal and/or metalloid compound selected from aluminium, silicon, or any oxides thereof, or any combination thereof, preferably comprising aluminium, aluminium oxide, silicon oxide, or any combination thereof, preferably comprising aluminium.

13. The packaging material (20a, 20b) according to anyone of the preceding claims, wherein the thickness of the vapour-deposited metal and/or metalloid layer (13a, 13b, 13c, 13d) is in the range of 1-500 nm, such as 10-100 nm, such as 15-80 nm, such as 20-50 nm.

14. The packaging material (20a, 20b) according to anyone of the preceding claims, wherein the barrier layer (10a, 10b, 10c, 10d, 25a, 25b) further contains a paper barrier material layer (11a, 11b, 11c, 11d) or a polymer barrier material layer (11a, 11b, 11c, 11d).

15. The packaging material (20a, 20b) according to any one of claims 2-14, wherein the outermost liquid-tight polymer layer (22) comprises or mainly consists of a thermoplastic polymer, preferably the thermoplastic polymer is selected from polyethylene (PE), polypropylene (PP), or any combination or copolymer thereof, preferably the thermoplastic polymer is selected from PP, LDPE, LLDPE, mLLDPE, or any combination or copolymer thereof, preferably the thermoplastic polymer is selected from LDPE, LLDPE, mLLDPE, or any combination thereof.

16. The packaging material (20a, 20b) according to anyone of the preceding claims, wherein the inner liquid-tight, heat-sealable polymer layer (23) mainly consists of thermoplastic polymer, preferably the thermoplastic polymer is selected from polyethylene (PE), polypropylene (PP), or any combination or copolymer thereof, preferably the thermoplastic polymer is selected from PP, LDPE, LLDPE, mLLDPE, or any combination or copolymer thereof, preferably the thermoplastic polymer is selected from LDPE, LLDPE, mLLDPE, or any combination thereof.

17. The packaging material (20a, 20b) according to anyone of the preceding claims, further comprising at least one intermediate polymer layer (14b, 14c, 14d, 15c, 15d, 24, 26) comprising or mainly consisting of a compound selected from modified polyolefins, preferably graft co-polymers of polyethylene or polypropylene with functional group containing carboxylic monomer units, such as (meth)acrylic acid monomers or maleic anhydride (MAH) monomers, preferably ethylene acrylic acid copolymers (EAA), ethylene methacrylic acid copolymer (EMAA)), maleic anhydride grafted (MA-g) polyethylene, or any combination thereof, preferably selected from ethylene acrylic acid copolymers (EAA), ethylene methacrylic acid copolymer (EMAA)), maleic anhydride grafted (MA-g) low density polyethylene, or any combination thereof.

18. The packaging material (20a, 20b) according to anyone of the preceding claims, wherein said at least one intermediate polymer layer (14b, 14c, 14d, 15c, 15d, 24, 26) is provided within the barrier layer (10a, 10b, 10c, 10d, 25a, 25b), is provided between the barrier layer (10a, 10b, 10c, 10d, 25a, 25b) and the inner liquid-tight, heat-sealable polymer layer (23), and/or is provided between the barrier layer (10a, 10b, 10c, 10d, 25a, 25b) and the bulk layer (21).

19. The packaging material (20a, 20b) according to anyone of the preceding claims, wherein the barrier layer (10a, 10b, 10c, 10d, 25a, 25b) is positioned in proximity of, preferably adjacent, the inner liquid-tight, heat-sealable polymer layer (23), preferably the vapour-deposited metal and/or metalloid layer (13a, 13b, 13c, 13d) or said at least one graphene-containing layer or portion (12a, 12b, 12c, 12d) of the barrier layer (10a, 10b, 10c, 10d, 25a, 25b) is positioned in proximity of, preferably adjacent, the inner liquid-tight, heat-sealable polymer layer (23), preferably said at least one graphene-containing layer or portion (12a, 12b, 12c, 12d) is positioned between the vapour-deposited metal and/or metalloid layer (13a, 13b, 13c, 13d) and the inner liquid-tight, heat-sealable polymer layer (23).

20. The packaging material (20a, 20b) according to anyone of the preceding claims, wherein the graphene-containing layer or portion (12a, 12b, 12c, 12d) is positioned locally at one or more areas of the packaging material (20a, 20b) that are intended to form part of sealing zones.

21. The packaging material (20a, 20b) according to anyone of the preceding claims, wherein said at least one graphene-based layer or portion (12a, 12b, 12c, 12d) has a thermal conductivity of about 30-1500 W/mK, such as 40-1000 W/mK, 50-500 W/mK, 50-150 W/mK, 80-130 W/mK, or 90-120 W/mK.

22. A method of manufacturing a non-aluminium foil laminated packaging material (20a, 20b), according to any one of claims 2-20, comprising laminating the packaging material (20a, 20b) by contacting the barrier layer (10a, 10b, 10c, 10d, 25a, 25b) and the inner liquid-tight, heat-sealable layer (23) with one side of the bulk layer (21), and contacting the outermost liquid-tight polymer layer (22) with the opposite side of the bulk layer (21).

23. The method according to claim 22, wherein said at least one graphene-containing layer or portion (12a, 12b, 12c, 12d) of the barrier layer (10a, 10b, 10c, 10d, 25a, 25b) is applied in-line during the packaging material laminating process, preferably applied as a free-standing film, or supported on a woven polyolefin carrier, or is provided as a dispersion coating, preferably provided as a dispersion coating.

24. A packaging container comprising the non-aluminium foil laminated packaging material (20a, 20b) according to anyone of claims 1-21.

25. The packaging container according to claim 24, comprising a main body formed by the packaging material (20a, 20b) and having at least one heat seal (51, 52) arranged at a sealing area, wherein said at least one graphene-containing layer or portion (12a, 12b, 12c, 12d) of the packaging material (20a, 20b) is arranged at said sealing area.

26. A method for manufacturing the packaging container (50, 66) according to claims 24 or 25, comprising heat sealing the packaging material (20a, 20b) by activating an electromagnetic device such that heat is generated in the vapour-deposited metal and/or metalloid layer (13a, 13b, 13c, 13d) of said packaging material (20a, 20b), or heat sealing the packaging material (20a, 20b) by activating an ultrasonic device such that heat is generated in the vapour-deposited metal and/or metalloid layer (13a, 13b, 13c, 13d) of said packaging material (20a, 20b).

27. The method according to claim 26, wherein the electromagnetic device is operating at a frequency from 100 kHz to 27 MHz, such as from 1 MHz to 27 MHz, such as from 13 MHz to 27 MHz, or the ultrasonic device is operating at a frequency from 15 kHz to 50 kHz, such as 20-40, or 25-35 kHz.

28. The method for manufacturing the packaging container according to claims 26 or 27, comprising dissipation of heat via said at least one graphene-containing layer or portion (12a, 12b, 12c, 12d) during and after said heat sealing.
